# EUROPEAN PATENT SPECIFICATION

(11) **EP 4 198 326 B1**
(45) Date of publication and mention of the grant of the patent: **04.02.2026**
(21) Application number: 21214937.1
(22) Date of filing: 15.12.2021
(51) Int. Cl.: F16C 11/06, F16C 11/10

(54) **ROTARY JOINT WITH ANGULAR LOCKING MECHANISM**
DREHGELENK MIT WINKELSPERRMECHANISMUS
JOINT ROTATIF AVEC MÉCANISME DE VERROUILLAGE ANGULAIRE

(43) Date of publication of application: 21.06.2023
(73) Proprietor: AIRBUS S.A.S., 31700 Blagnac Cedex (FR)
(72) Inventor: Bürger, Thomas, 82024 Taufkirchen (DE)
(74) Representative: Isarpatent

(56) References cited:
- WO-A1-2017/165920
- WO-A1-2020/148034
- DE-A1- 10 157 508
- US-B1- 10 890 210
- US-B2- 8 902 167

## Description

The present invention pertains to a rotary joint with angular locking mechanism as for example disclosed in US 10 890 210 B1.

Beams, joists, rods and frames for construction work, for example in aeronautics, civil engineering or architecture, are designed to withstand bending forces acting perpendicular to their direction of extension. These elements are often connected with each other at joints, also referred to as nodes, to build two- or three-dimensional frameworks. Individual connections in these frameworks may be flexurally rigid or articulated, e.g. by means of pivots or rotary joints. In some applications an articulated connection may be preferred as it may help to compensate for existing tolerances and to avoid eccentricity moments.

Considering the interior architecture of an airplane as an example, e.g. of a large passenger aircraft, a variety of fastening elements, e.g. brackets, holders etc., and a complex arrangement of interconnecting means, e.g. rods, struts etc., are normally used to affix elements to the structural airframe of the airplane. Moreover, frameworks of rods and joints sometimes need to be provided temporarily on top of aircraft structures for assembly purposes during manufacturing of the respective aircraft. For example, a common task in aircraft manufacturing includes filling gaps within aerodynamic surfaces, e.g. in an airfoil, in order to optimize laminar flow across the respective surface. To this end, complex support frames often need to be assembled on top of three-dimensionally curved surfaces (e.g. aircraft wings), which hold and position the respective tools required for the assembly. Common solutions for assembling such frameworks are sometimes not adequate with regards to flexibility, compactness and/or weight, in particular in case of surfaces with complex shapes.

Prior art document EP 3 159 257 A1 describes a rotary joint with an actuator, a framework construction kit and a framework with rotary joints.

Against this background, it is an object of the present invention to find solutions for joints that are simple in construction, lightweight and adjustable.

This object is achieved by a rotary joint having the features of claim 1.

According to an aspect of the invention, a rotary joint with angular locking mechanism comprises a socket rod having an at least partly spheroid concave bearing surface; a ball rod having an at least partly spheroid convex bearing surface slidingly engaging the concave bearing surface of the socket rod, wherein the curvature of the concave bearing surface of the socket rod corresponds substantially to the curvature of the convex bearing surface of the ball rod; wherein a locking element is embedded in the socket rod or the ball rod at the respective bearing surface and configured to be actuated to press against the respective opposite bearing surface to lock the socket rod with respect to the ball rod at a current relative position thereby setting a respective inclination angle between the socket rod and the ball rod.

Thus, one idea of the present invention is to implement a simple yet effective angular locking mechanism in a ball-and-socket type joint by integrating a locking element directly at the interfacing surfaces of the joint, which can selectively block and unblock any relative sliding movement between the joint elements, thereby fixing a relative orientation of both rod elements in any desired angular direction. The locking element of the invention thus can help to connect mechanical elements under different and changing angles, e.g. in case that a framework of struts, rods and joints needs to be assembled on top of complex shaped surfaces. Support frames can hence be adapted on a free-curved ground or surface and can be easily mounted and demounted. The presently described joint is simple in construction and yet suitable for complex applications providing maximum freedom of adjustment and offering new options for mechanical connections.

The joint itself comprises a protruding ball rod that has a basically (at least partly) spheroid convex outer surface. A corresponding socket rod has a basically (at least partly) spheroid concave outer surface at a flange portion at one end. The basic shape of the concave outer surface principally corresponds to the shape of the convex outer surface of so that both connection parts may be in contact with each other and the touching convex and concave outer surfaces may move in a sliding manner with respect to each other, similar to a ball-and-socket connection. Along the contacting surfaces of the ball part and the socket part a swiveling motion may be realized. Hence, any lateral moment acting on struts or other elements coupled to these rods with respect to the contacting surfaces of the rotary joint will lead to a shifting movement along the joint surfaces. In other words, any bending moment acting perpendicular to the orientation of the strut/socket rod will vanish with respect to the rotary joint due to the compensating sliding movement (assuming that the joint is in the unlocked state). This means in turn that the unlocked rotary joint will be essentially free of any bending moments that would otherwise be brought into the rotary joints. The axes of struts (or other elongated elements) coupled to such rotary joints will always be oriented towards the center of the rotary joint, thereby balancing out the rotary joint optimally under any loading situation on the struts.

The presently described joint may particularly be adapted as a nut joint, which is a special form of the ball joint in which the socket encloses the joint head beyond its equator. Such a joint may be manufactured, for example, by forming both joint elements separately and then forcing the ball part into the socket part (the latter may be configured in a slightly flexible manner in order to support this). However, alternatively, the complete joint may be manufactured in an integrated manner basically in a single manufacturing step by using a 3D printing or additive manufacturing (AM) technique used for generating three-dimensional objects by creating a cross-sectional pattern of the object to be formed and forming the three-dimensional solid object by sequentially building up layers of material. AM or 3D printing techniques usually include selectively depositing material layer by layer, selectively fusing or solidifying the material and removing excess material, if needed. 3D/AM is currently used for prototyping and distributed manufacturing with multiple applications in engineering, construction, industrial design, automotive industries and aerospace industries. Using such 3D printing processes even complexly structured joints parts may be manufactured as integral plastic or metal objects in cost and time efficient production manner. Socket and ball parts may particularly be manufactured together, thereby opening up the possibility to form a closed nut arrangement already during manufacturing, in which the socket encloses the ball considerably beyond its equator.

Rotary joints as disclosed hereinforth may be used in a lot of applications, including - but not limited to - constructions of frameworks in aircraft, interior design, bridge building, vehicle carriages, civil engineering, applications for children's toys and similar. A particular application pertains to the construction of frameworks in aircraft assembly. However, the present invention may be employed basically anywhere where adjustable joint connections are required and/or helpful. The invention also provides advantages in ordinary applications, e.g. adjustable tripods, or any kind of frames or stages where adjustability is needed. Ultimately, the invention has an extremely wide range of uses, from automotive applications, to experimental setups, scaffolding etc.

Advantageous embodiments and improvements of the present invention are found in the subordinate claims.

According to the invention, the locking element comprises ubber.

For example, a simple rubber knob or several such elements may already be sufficient to effectively block any relative movement between plastic or metal parts. Locking elements may be integrally formed together with the other joint elements. Alternatively, a locking element may also be introduced in the bearing surfaces subsequently.

According to an embodiment of the invention, the respective opposite bearing surface may be rubberized.

For example, a rubber pin may be integrated as locking element in the concave bearing surface of the socket rod. Rubberizing the surface of the opposite convex bearing surface of the ball rod may thus support effective and precise locking of the joint in one desired orientation. It is to be understood of course that also other surface treatments and/or coatings may be helpful depending on the specific use case at hand. In principle, any material and/or surface treatment that increases friction between both bearing surfaces may be employed in order to support the locking mechanism. Moreover, it is possible to adapt both bearing surfaces in this vein and not only the one opposite to the locking element.

According to the invention, the locking element is formed as a pin.

The pin may be embedded within the respective bearing surface such that it can be retracted into the surface into a position where it ends flush with the respective surface or is retracted to a recessed position within the respective surface. The pin may then be extended or driven out of the respective position to push against the opposite bearing surface.

According to the invention, the locking element may be actuated by a spring element within the respective rod.

A rubber pin may be actuated, for example, by a cylindrical spring or similar element to extend from the respective bearing surface and to push against the respective other bearing surface.

According to an embodiment of the invention, the respective rod with the locking element may comprise a manual control element enabling locking and unlocking of the locking element by an operator.

It is to be understood however that also electrically driven and/or automatic control elements may offer advantages in particular applications. A manual control element offers a simple and thus inexpensive and yet robust and fault proof solution in case that one or several joints need to be adjusted by hand.

According to an embodiment of the invention, the control element may be a hand gear protruding from the respective rod.

For example, the respective rod may feature a recess or receptacle or the like, in which a lever is mounted and mechanically coupled to the locking element, e.g. a rubber pin connected to the lever by means of a spring element.

According to an embodiment of the invention, the control element may be mounted in a locking track for blocking the locking element in the locked state.

For example, the hand gear may be arranged movable between a first position, e.g. a first slot, in which the locking element is in the unlocked position, and a second position, e.g. a second slot arranged perpendicular and/or shifted to the first slot, in which the locking element pushes against the respective bearing surface, thereby blocking any relative movement of the bearing surfaces.

According to an embodiment of the invention, the concave bearing surface may comprise at least one slit open at one side and oriented such that the ball rod can slide into the slit by relative rotation at the bearing surfaces.

In this embodiment, angular movement of the ball rod with respect to the socket rod may be extend even across the equator of the concave bearing surface at least along one or several slits.

According to an embodiment of the invention, the socket rod and/or the ball rod may be configured with mounting threads at respective opposite ends to the bearing surfaces for coupling the rods to other elements of a framework.

In this vein, both the socket rod and the ball rod may be screwed onto other elements of a framework at their respective ends opposite to the bearing surfaces. For example, a strut may be provided with an appropriate counter thread to receive the socket rod and/or the ball rod.

The invention will be explained in greater detail with reference to exemplary embodiments depicted in the drawings as appended.

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the following detailed description. The elements of the drawings are not necessarily to scale relative to each other. In the figures, like reference numerals denote like or functionally like components, unless indicated otherwise.
Fig. 1 shows a cross-sectional side view of a rotary joint according to an embodiment of the invention.
Fig. 2 shows the rotary joint of Fig. 1 in two different angular configurations.
Fig. 3 depicts the rotary joint of Fig. 1 in a top view.
Fig. 4 shows a top view of a rotary joint according to another embodiment of the invention.
Fig. 5 shows the rotary joint of Fig. 4 in a different angular configuration.
Fig. 6 depicts a cross-sectional side view of a rotary joint according to yet another embodiment of the invention.

Although specific embodiments are illustrated and described herein, it will be appreciated by those of ordinary skill in the art that a variety of alternate and/or equivalent implementations may be substituted for the specific embodiments shown and described without departing from the scope of the present invention. Generally, this application is intended to cover any adaptations or variations of the specific embodiments discussed herein.

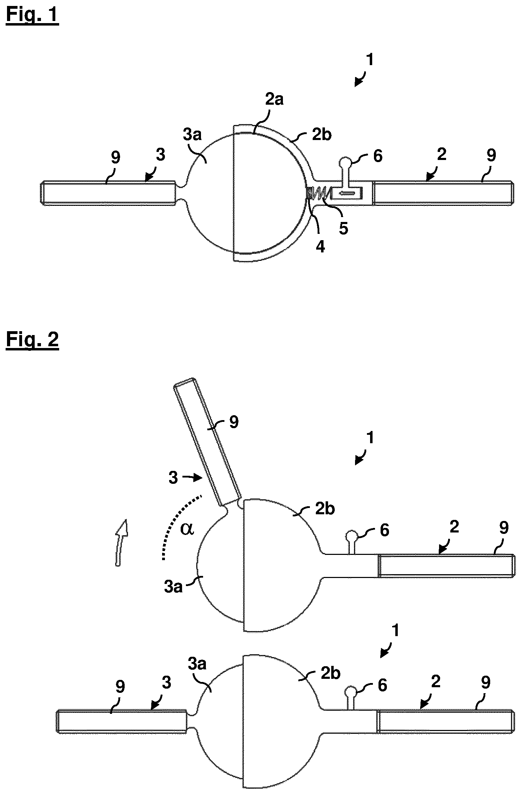

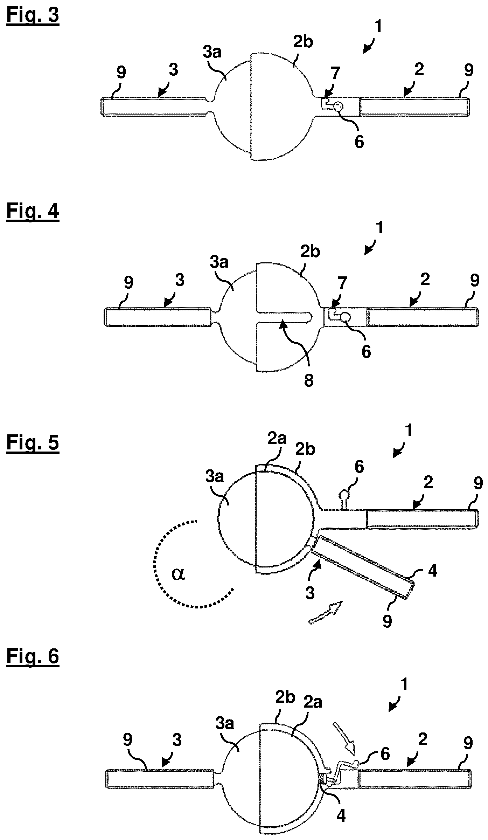

Figure 1 shows a cross-sectional side view of a rotary joint 1 according to an embodiment of the invention. Fig. 2 shows the rotary joint 1 of Fig. 1 in two different angular configurations, while Fig. 3 depicts the rotary joint 1 in a top view.

The rotatory joint 1 is formed as nut joint between an elongated socket rod 2 and an elongated ball rod 3, both having mounting threads 9 at respective ends to be mounted to other elements of a framework, e.g. other rods or struts, to a fixture, a wall, a surface or component etc. The socket rod 2 is formed with a socket flange 2b at its other end opposite to the mounting thread 9, the socket flange 2b being formed as a spherical shell having an at least partly spheroid concave bearing surface 2a on the inside. The ball rod 3 on the other hand is formed complementary to this with an at least partly spheroid convex bearing surface 3a, which slidingly engages the concave bearing surface 2a of the socket rod 2. The curvature of the concave bearing surface 2a of the socket rod 2 corresponds substantially to the curvature of the convex bearing surface 3a of the ball rod 3.

As illustrated with reference to Fig. 2, both rods 2, 3 may thus be oriented with respect to each other under a certain inclination angle α, between 0° and a maximum inclination defined by an edge of the socket flange 2b (limiting movement of the ball rod 3 relative to the socket rod 2). In the depicted exemplary embodiment, the socket flange 2b encloses the ball head of the ball rod 3 beyond its equator, hence the joint 1 is a nut joint. This implies that the inclination angle is limited to absolute values below 90° (at least in principle, cf. Fig. 5 for an alternative solution that extends the freedom of movement).

The rotary joint 1 is provided with an angular locking mechanism that allows to fix and secure the joint 1 in a given relative orientation of the rods 2, 3. To this end, the rotary joint 1 comprises a locking element 4 embedded in the socket rod 2 at the bearing surface 2a and configured to be actuated to press against the opposite bearing surface 3a of the ball rod 3 at a current relative position thereby setting the inclination angle α between the socket rod 2 and the ball rod 3.

In the depicted example the locking element 4 is a rubber pin that is actuated by a spring 5 within the socket rod 2, which in turn is coupled to a hand gear employed as manual control element 6 movable within a locking track 7 between a first position, in which the locking element 4 is retracted within the socket rod 2, thereby allowing relative sliding movement between the rods 2, 3, and a second position, in which the locking element 4 is pushed by the actuation element 5 against the convex bearing surface 3a of the ball rod 3, thereby blocking relative movements of both rods 2, 3 at the current inclination angle α. In order to improve the strength of the coupling between both rods 2, 3 in the locked state, the surface of the convex bearing surface 3a (and/or of the concave bearing surface 2a) may be treated in a favorable way, e.g. it may be rubberized.

On basis of this solution, one or several rotary joints 1 can be utilized within a complex framework to adapt the angles between the interconnecting elements appropriately in a very simple and quick manner. The joint components may be formed from plastic and/or metal and may, for example, be formed my advanced additive manufacturing processes in a more or less integrated fashion.

In one particular use case, the joint 1 may be employed within a support frame in aircraft construction and/or manufacturing, e.g. on top of a three-dimensionally curved aerodynamic surface of an airplane. The invention provides maximum freedom of adjustment in this case to be able to assemble and rearrange even complex frameworks of struts, rods, holders and tools on top an aircraft structure. With reference to Figs. 4 and 5, an alternative embodiment is shown that is basically similar to the embodiment of Figs. 1 to 3. However, in this case the concave bearing surface 2a comprises one or several slits 8 open at one side towards the ball rod 3 and oriented such that the ball rod 3 can slide into each respective slit 8 by relative rotation at the bearing surfaces 2a, 3a.

As can be seen in Fig. 5, relative movement of both rods 2, 3 is thus extend along these slits 8, which effectively increases the available range for the inclination angle α, at least in certain directions defined by the slits 8. This increased degree of freedom can be further enhanced by using adaptable connections of the rods 2, 3 to the respective framework. For example, it may be possible to rotate one or both respective rods 2, 3 axially around their respective axis of elongation relative to the framework by means of the mounting threads 9 or other suitable means. Combined with at least one slit 8, basically any relative orientation of both rods 2, 3 can be made possible within the limits of the extended inclination angle α as defined by the extension of the slit 8.

It is to be understood of course that the embodiments described with reference to Figs. 1 to 5 are merely example for the present invention. The person of skill will readily conceive other solutions based on different specific implementations of the locking element and the actuation mechanism.

Fig. 6 provides one simple example of such an alternative embodiment. In this case, the manual control element 6 is configured as a clamping lever, which may be pushed against the socket rod 2 to force the locking element 4 against the convex bearing surface 3a of the ball rod 3. A spring or other actuation element 5 may not be required in such a configuration.

It is further to be understood that the locking element 4 does not necessarily have to be implemented in the concave bearing surface 2a of the socket rod 2 but can alternatively be also embedded within convex bearing surface 3a. In principle, it may even be advantageous in some embodiments if both bearing surfaces 2a, 3a are provided with respective locking elements.

In the foregoing detailed description, various features are grouped together in one or more examples or examples with the purpose of streamlining the disclosure. It is to be understood that the above description is intended to be illustrative, and not restrictive. It is intended to cover all alternatives, modifications and equivalents. Many other examples will be apparent to one skilled in the art upon reviewing the above specification. The embodiments were chosen and described in order to best explain the principles of the invention and its practical applications, to thereby enable others skilled in the art to best utilize the invention. The invention is defined by the appended claims.

### List of reference signs

- 1: rotary joint
- 2: socket rod
- 2a: concave bearing surface
- 2b: socket flange
- 3: ball rod
- 3a: convex bearing surface
- 4: locking element
- 5: actuation element
- 6: manual control element
- 7: locking track
- 8: slit
- 9: mounting thread
- α: inclination angle

## Claims

1. Rotary joint (1) with angular locking mechanism, the rotary joint (1) comprising:
a socket rod (2) having an at least partly spheroid concave bearing surface (2a);
a ball rod (3) having an at least partly spheroid convex bearing surface (3a) slidingly engaging the concave bearing surface (2a) of the socket rod (2),
wherein the curvature of the concave bearing surface (2a) of the socket rod (2) corresponds substantially to the curvature of the convex bearing surface (3a) of the ball rod (3);
wherein a locking element (4) is embedded in the socket rod (2) or the ball rod (3) at the respective bearing surface (2a, 3a) and configured to be actuated to press against the respective opposite bearing surface (2a, 3a) to lock the socket rod (2) with respect to the ball rod (3) at a current relative position thereby setting a respective inclination angle (α) between the socket rod (2) and the ball rod (3);
wherein the locking element (4) is formed as a pin and actuated by an actuation element (5) within the respective rod (2, 3), the actuation element (5) being configured as a spring,
**characterized in that** the pin comprises rubber.

2. Rotary joint (1) according to claim 1, wherein the respective opposite bearing surface (2a, 3a) is rubberized.

3. Rotary joint (1) according to claim 1 or 2, wherein the respective rod (2, 3) with the locking element (4) comprises a manual control element (6) enabling locking and unlocking of the locking element (4) by an operator.

4. Rotary joint (1) according to claim 3, wherein the control element (6) is a hand gear protruding from the respective rod (2, 3).

5. Rotary joint (1) according to claim 4, wherein the control element (6) is mounted in a locking track (7) for blocking the locking element (4) in the locked state.

6. Rotary joint (1) according to one of the claims 1 to 5, wherein the concave bearing surface (2a) comprises at least one slit (8) open at one side and oriented such that the ball rod (3) can slide into the slit (8) by relative rotation at the bearing surfaces (2a, 3a).

7. Rotary joint (1) according to one of the claims 1 to 6, wherein the socket rod (2) and/or the ball rod (3) are configured with mounting threads (9) at respective opposite ends to the bearing surfaces (2a, 3a) for coupling the rods (2, 3) to other elements of a framework.

## Patentansprüche

1. Drehgelenk (1) mit Winkelsperrmechanismus, wobei das Drehgelenk (1) Folgendes umfasst:
eine Pfannenstange (2) mit einer zumindest teilweise kugelförmigen konkaven Lagerfläche (2a);
eine Kugelstange (3) mit einer zumindest teilweise kugelförmigen konvexen Lagerfläche (3a), die gleitend in die konkave Lagerfläche (2a) der Pfannenstange (2) eingreift, wobei die Krümmung der konkaven Lagerfläche (2a) der Pfannenstange (2) im Wesentlichen der Krümmung der konvexen Lagerfläche (3a) der Kugelstange (3) entspricht;
wobei ein Sperrelement (4) in der Pfannenstange (2) oder der Kugelstange (3) an der jeweiligen Lagerfläche (2a, 3a) eingebettet und dazu ausgelegt ist, betätigt zu werden, um gegen die jeweilige gegenüberliegende Lagerfläche (2a, 3a) zu drücken, um die Pfannenstange (2) in Bezug auf die Kugelstange (3) in einer aktuellen relativen Position zu sperren, wodurch ein jeweiliger Neigungswinkel (α) zwischen der Pfannenstange (2) und der Kugelstange (3) eingestellt wird;
wobei das Sperrelement (4) als Stift ausgebildet ist und durch ein Betätigungselement (5) innerhalb der jeweiligen Stange (2, 3) betätigt wird, wobei das Betätigungselement (5) als Feder ausgelegt ist, **dadurch gekennzeichnet, dass** der Stift Gummi umfasst.

2. Drehgelenk (1) nach Anspruch 1, wobei die jeweils gegenüberliegende Lagerfläche (2a, 3a) gummiert ist.

3. Drehgelenk (1) nach Anspruch 1 oder 2, wobei die jeweilige Stange (2, 3) mit dem Sperrelement (4) ein manuelles Bedienelement (6) umfasst, das ein Sperren und Entsperren des Sperrelements (4) durch eine Bedienungsperson ermöglicht.

4. Drehgelenk (1) nach Anspruch 3, wobei das Steuerelement (6) ein von der jeweiligen Stange (2, 3) vorstehendes Handrad ist.

5. Drehgelenk (1) nach Anspruch 4, wobei das Steuerelement (6) in einer Sperrbahn (7) zum Blockieren des Sperrelements (4) im gesperrten Zustand montiert ist.

6. Drehgelenk (1) nach einem der Ansprüche 1 bis 5, wobei die konkave Lagerfläche (2a) mindestens einen einseitig offenen Schlitz (8) aufweist, der so ausgerichtet ist, dass die Kugelstange (3) durch eine relative Drehung an den Lagerflächen (2a, 3a) in den Schlitz (8) gleiten kann.

7. Drehgelenk (1) nach einem der Ansprüche 1 bis 6, wobei die Pfannenstange (2) und/oder die Kugelstange (3) an den Lagerflächen (2a, 3a) jeweils gegenüberliegenden Enden mit Montagegewinden (9) zur Kopplung der Stangen (2, 3) mit anderen Elementen eines Gestells ausgelegt sind.

## Revendications

1. Joint rotatif (1) avec mécanisme de verrouillage angulaire, le joint rotatif (1) comprenant :
une tige à douille (2) présentant une surface d'appui concave (2a) au moins partiellement sphéroïde ;
une tige à rotule (3) présentant une surface d'appui convexe (3a) au moins partiellement sphéroïde qui vient en prise coulissante avec la surface d'appui concave (2a) de la tige à rotule (2), la courbure de la surface d'appui concave (2a) de la tige à rotule (2) correspondant sensiblement à la courbure de la surface d'appui convexe (3a) de la tige à rotule (3) ;
un élément de verrouillage (4) étant intégré dans la tige à douille (2) ou la tige à rotule (3) au niveau de la surface d'appui (2a, 3a) respective et conçu pour être actionné pour appuyer contre la surface d'appui (2a, 3a) opposée respective pour verrouiller la tige à douille (2) par rapport à la tige à rotule (3) au niveau d'une position relative courante, réglant ainsi un angle d'inclinaison (α) respectif entre la tige à douille (2) et la tige à rotule (3) ;
l'élément de verrouillage (4) étant réalisé sous la forme d'une goupille et étant actionné par un élément d'actionnement (5) à l'intérieur de la tige (2, 3) respective, l'élément d'actionnement (5) étant réalisé sous la forme d'un ressort, **caractérisé en ce que** la goupille comprend du caoutchouc.

2. Joint rotatif (1) selon la revendication 1, la surface d'appui (2a, 3a) opposée respective étant caoutchoutée.

3. Joint rotatif (1) selon la revendication 1 ou 2, la tige (2, 3) respective avec l'élément de verrouillage (4) comprenant un élément de commande manuelle (6) permettant le verrouillage et le déverrouillage de l'élément de verrouillage (4) par un opérateur.

4. Joint rotatif (1) selon la revendication 3, l'élément de commande (6) étant un engrenage à main faisant saillie de la tige (2, 3) respective.

5. Joint rotatif (1) selon la revendication 4, l'élément de commande (6) étant monté dans une piste de verrouillage (7) pour bloquer l'élément de verrouillage (4) à l'état verrouillé.

6. Joint rotatif (1) selon l'une des revendications 1 à 5, la surface d'appui concave (2a) présentant au moins une fente (8) ouverte d'un côté et orientée de sorte que la tige à rotule (3) puisse coulisser dans la fente (8) par rotation relative sur les surfaces d'appui (2a, 3a).

7. Joint rotatif (1) selon l'une quelconque des revendications 1 à 6, la tige à douille (2) et/ou la tige à rotule (3) étant réalisées avec des filetages de montage (9) au niveau des extrémités opposées respectives aux surfaces d'appui (2a, 3a) pour accoupler les tiges (2, 3) à d'autres éléments d'un cadre.
